# EUROPEAN PATENT APPLICATION

(11) **EP 4 811 850 A1**
(43) Date of publication of application: **23.09.2026**
(21) Application number: 24906433.8
(22) Date of filing: 19.12.2024
(51) Int. Cl.: H04W 24/02

(54) **MEASUREMENT METHOD AND APPARATUS, TERMINAL, NETWORK DEVICE AND STORAGE MEDIUM**

(30) Priority: 21.12.2023 CN 202311772222
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Jingjing, Beijing 100032 (CN)
(74) Representative: GPI Brevets
(86) International application number: PCT/CN2024/140497
(87) International publication number: WO 2025/130954

(57) **Abstract**

Provided are a measurement method and apparatus, a UE, a network device, and a storage medium, which belong to the field of communication technologies. The measurement method is applied to a UE, and the method includes at least one of the following: receiving first information sent by a network, wherein the first information is used to indicate the UE to keep colliding measurement gaps; resolving the collision between measurement gaps based on measurement gap priorities; sending second information to the network, wherein the second information is used to indicate that the UE requests to keep colliding measurement gaps; sending third information to the network, wherein the third information is information related to a priority.

## Description

### CROSS-REFERENCE TO RELATED APPLICATION

The present application claims the priority of Chinese Patent Application No. 202311772222.0 filed in China on December 21, 2023, the disclosure of which is incorporated herein by reference in its entirety.

### TECHNICAL FIELD

The present disclosure relates to the field of communication technologies, and in particular to a measurement method and apparatus, a User Equipment (UE), a network device, and a storage medium.

### BACKGROUND

With UEs supporting an increasing number of measurement gap configurations, taking a multi-universal subscriber identity module (MUSIM) as an example, a UE can support up to five measurement gaps configured simultaneously. MUSIM gaps configured by a network need to be based on requests from the UE, that is, the gaps configured by the network can only be selected from measurement gaps requested by the UE. In this case, for measurement gaps colliding in time domain, considering that the gaps are requested by the UE, if a priority-based manner in the prior art is adopted to select one or more measurement gaps, it results in a waste of resources. Alternatively, if the selection is not performed based on the priority-based manner, it collides with the prior art. Therefore, the existing handling manner for measurement gaps colliding in time domain has poor flexibility and cannot accommodate different UEs, and thus a new approach is required to handle collides (i.e., time domain colliding) between measurement gaps.

### SUMMARY

The objective of the technical solutions of the present disclosure is to provide a measurement method and apparatus, a UE, a network device, and a storage medium, so as to solve the problem that the existing handling manner for measurement gaps colliding in time domain has poor flexibility and cannot accommodate different UEs.

To solve the above technical problem, the embodiments of the present disclosure provide the following technical solutions.

In a first aspect, an embodiment of the present disclosure provides a measurement method, applied to a UE, the method including at least one of the following:
receiving first information sent by a network, wherein the first information is used to indicate the UE to keep colliding measurement gaps;
resolving the collision between measurement gaps based on measurement gap priorities;
sending second information to the network, wherein the second information is used to indicate that the UE requests to keep colliding measurement gaps;
sending third information to the network, wherein the third information is information related to a priority.

Optionally, the method further includes at least one of the following:
when an aperiodic measurement gap collides with a measurement gap other than the aperiodic measurement gap, the aperiodic measurement gap is kept;
when an aperiodic multi-universal subscriber identity module gap (MUSIM gap) collides with any other gap, the aperiodic MUSIM gap is unconditionally kept.

Optionally, the third information includes a priority for the measurement gap requested by the UE.

Optionally, the UE requests different priority for each measurement gap.

Optionally, resolving the collision between measurement gaps based on the measurement gap priorities includes at least one of the following:
when a number of the colliding measurement gaps is greater than 2, resolving the collision between measurement gaps in a descending order of the priorities;
collisions between MUSIM gaps and measurement gaps are resolved based on priorities;
collisions between MUSIM gaps and measurement gaps are resolved based on assigned priorities;
collision between MUSIM gaps and measurement gap with assigned priority are resolved based on the priorities;
starting with the gap that has the highest priority, collisions are resolved sequentially in order of decreasing priority;
for each collision, the gap with higher priority shall be kept;
for each collision, the gap with higher priority shall be kept and other gaps shall be dropped.

Optionally, the method further includes:
sending index indication information to the network, wherein the index indication information includes index information of the kept measurement gaps.

Optionally, when kept N measurement gaps are MUSIM gaps and the N MUSIM gaps collide with a first measurement gap, the method further includes at least one of the following:
if a priority of the first measurement gap is higher than priorities of the N MUSIM gaps, keeping the first measurement gap or dropping the N MUSIM gaps;
if the priority of the first measurement gap is higher than any of priorities of the N MUSIM gaps, keeping the first measurement gap or dropping the N MUSIM gaps;
if the priority of the first measurement gap is lower than any of priorities of the N MUSIM gaps, dropping the first measurement gap or keeping the N MUSIM gaps;
if the priority of the first measurement gap is higher than a first priority, keeping the first measurement gap or dropping the N MUSIM gaps, wherein the first priority is a highest priority among the priorities of the N MUSIM gaps;
if the priority of the first measurement gap is lower than a second priority, dropping the first measurement gap or keeping the N MUSIM gaps, wherein the second priority is a lowest priority among the priorities of the N MUSIM gaps;
if the priority of the first measurement gap is higher than a priority of a first MUSIM gap, keeping the first measurement gap or dropping the N MUSIM gaps, wherein the N MUSIM gaps include the first MUSIM gap;
if the priority of the first measurement gap is lower than the priority of the first MUSIM gap, dropping the first measurement gap or keeping the N MUSIM gaps, wherein the N MUSIM gaps include the first MUSIM gap;
wherein N is a non-zero integer.

Optionally, the first measurement gap is a measurement gap other than the MUSIM gap;
the first measurement gap includes at least one of the following:
a pre-configured measurement gap (pre-MG);
a network controlled small gap (NCSG);
a Type-2 measurement gap (MG).

Optionally, the first MUSIM gap includes:
information that is related to the first MUSIM gap and sent by the network, wherein the information related to the first MUSIM gap includes at least one of the following: an index of the first MUSIM gap, a gap period of the first MUSIM gap, or a gap length of the first MUSIM gap;
the first MUSIM gap is a MUSIM gap with the highest priority among the N MUSIM gaps;
the first MUSIM gap is a MUSIM gap with the lowest priority among the N MUSIM gaps.

Optionally, when M measurement gaps collide, the method further includes at least one of the following:
when P measurement gaps among the M measurement gaps are MUSIM gaps, and the UE requests to process the P MUSIM gaps in a keep solution or the network indicates to keep the P MUSIM gaps, keeping the P MUSIM gaps, and handling collisions between the P MUSIM gaps and M-P measurement gaps based on the priorities;
handling the P MUSIM gaps based on priorities of the P MUSIM gaps, and when kept Q MUSIM gaps collide with the M-P measurement gaps, handling collisions between the Q MUSIM gaps and the M-P measurement gaps based on the priorities;
wherein M, P, and Q are non-zero integers, M is greater than P, and P is greater than Q.

Optionally, resolving the collision between measurement gaps based on the measurement gap priorities includes at least one of the following:
collisions between MUSIM gaps are resolved based on the priorities;
starting with the MUSIM gap that has the highest priority, collisions are resolved sequentially in order of decreasing priority;
for each collision, the MUSIM gap with the highest priority shall be kept;
for each collision, the MUSIM gap with the highest priority shall be kept and the MUSIM gap with lower priority shall be dropped.

Optionally, the method further includes at least one of the following:
collisions between MUSIM gaps and measurement gaps are handled based on measurement gap repetition period (MGRP);
collisions between MUSIM gaps and measurement gaps without assigned priority are handled based on MGRP;
starting with the gap that has the longest MGRP, collisions are resolved sequentially in order of decreasing MGRP;
for each collision, the gap with longer MGRP shall be kept;
for each collision, the gap with longer MGRP shall be kept and other gaps shall be dropped.

In a second aspect, an embodiment of the present disclosure further provides a measurement method, applied to a network, the method including at least one of the following:
sending first information to a UE, wherein the first information is used to indicate the UE to keep colliding measurement gaps;
receiving second information sent by the UE, wherein the second information is used to indicate that the UE requests to keep colliding measurement gaps;
receiving third information sent by the UE, wherein the third information is information related to a priority.

Optionally, the third information includes a priority for the measurement gap requested by the UE.

Optionally, the UE requests different priority for each measurement gap.

Optionally, the method further includes:
receiving index indication information sent by the UE, wherein the index indication information includes index information of the kept measurement gaps.

In a third aspect, an embodiment of the present disclosure further provides a measurement apparatus, applied to a UE, the apparatus including: a first processing module;
the first processing module is configured to perform at least one of the following:
receiving first information sent by a network, wherein the first information is used to indicate the UE to keep colliding measurement gaps;
resolving the collision between measurement gaps based on measurement gap priorities;
sending second information to the network, wherein the second information is used to indicate that the UE requests to keep colliding measurement gaps;
sending third information to the network, wherein the third information is information related to a priority.

In a fourth aspect, an embodiment of the present disclosure further provides a measurement apparatus, applied to a network, the apparatus including: a first transceiver module;
the first transceiver module is configured to perform at least one of the following:
sending first information to a UE, wherein the first information is used to indicate the UE to keep colliding measurement gaps;
receiving second information sent by the UE, wherein the second information is used to indicate that the UE requests to keep colliding measurement gaps;
receiving third information sent by the UE, wherein the third information is information related to a priority.

In a fifth aspect, an embodiment of the present disclosure further provides a UE, including: a processor, a memory, and a program stored on the memory and executable on the processor, wherein the program, when executed by the processor, implements the measurement method based on any one of the first aspect.

In a sixth aspect, an embodiment of the present disclosure further provides a network device, including: a processor, a memory, and a program stored on the memory and executable on the processor, wherein the program, when executed by the processor, implements the measurement method based on any one of the second aspect.

In a seventh aspect, an embodiment of the present disclosure further provides a readable storage medium storing thereon a program, wherein the program, when executed by a processor, implements the steps of the measurement method based on any one of the first aspect, or implements the steps of the measurement method based on any one of the second aspect.

At least one of the above technical solutions of the present disclosure has the following beneficial effects:
in the measurement method provided in the present disclosure, the UE performs at least one of the following: receiving first information sent by a network, wherein the first information is used to indicate the UE to keep colliding measurement gaps; resolving the collision between measurement gaps based on measurement gap priorities; sending second information to the network, wherein the second information is used to indicate that the UE requests to keep colliding measurement gaps; or sending third information to the network, wherein the third information is information related to a priority. Compared with the existing method that can only handle colliding measurement gaps in a priority-based manner, the benefit of introducing the first information and the second information lies in improving flexibility of handling the measurement gaps, and the benefit of introducing the third information lies in that, when the measurement gaps are implemented by the UE, the third information can provide a preference of the UE for the measurement gap priorities, thereby assisting the network in configuring priorities and being applicable to implementations of different UEs.

### BRIEF DESCRIPTION OF THE DRAWINGS

FIG. 1 is a flowchart of a measurement method applied to a UE based on an embodiment of the present disclosure;
FIG. 2 is a schematic diagram of a measurement gap based on an embodiment of the present disclosure;
FIG. 3 is another schematic diagram of a measurement gap based on an embodiment of the present disclosure;
FIG. 4 is yet another schematic diagram of a measurement gap based on an embodiment of the present disclosure;
FIG. 5 is a flowchart of a measurement method applied to a network based on an embodiment of the present disclosure;
FIG. 6 is a schematic structural diagram of a measurement apparatus applied to a UE based on an embodiment of the present disclosure;
FIG. 7 is a schematic structural diagram of a measurement apparatus applied to a network based on an embodiment of the present disclosure;
FIG. 8 is a schematic structural diagram of a UE based on an embodiment of the present disclosure;
FIG. 9 is a schematic structural diagram of a network device based on an embodiment of the present disclosure.

### DETAILED DESCRIPTION

To make the technical problems, technical solutions, and advantages to be solved by the present disclosure clearer, a detailed description will be made below with reference to the accompanying drawings and specific embodiments.

Before describing the specific embodiments of the present disclosure, the following description is first provided.

In the prior art, due to limited handling capability of a UE, when two configured measurement gaps (measurement gap_i and measurement gap_j) collision in time domain, the UE selects one of the two measurement gaps and performs measurement using only one measurement gap. The UE performs the selection based on priorities indicated by a network. Specifically, the network indicates that the priority of measurement gap_i is k and the priority of measurement gap_j is h, with a priority k being higher than the priority h. When measurement gaps collision, the UE can determine how to handle the collision by comparing the priorities corresponding to the measurement gaps, i.e., determining which measurement gap is to be used (the measurement gap with a higher priority is used for measurement; in the above example, since priority k is higher than the priority h, the UE uses measurement gap_i corresponding to priority k), and which measurement gap is to be dropped (the measurement gap with a lower priority is dropped; in the above example, the UE drops measurement gap_j).

To solve the problem that the existing handling manner for measurement gaps colliding in time domain has poor flexibility and cannot accommodate different UEs, the present disclosure provides a measurement method and apparatus, a UE, a network device, and a storage medium.

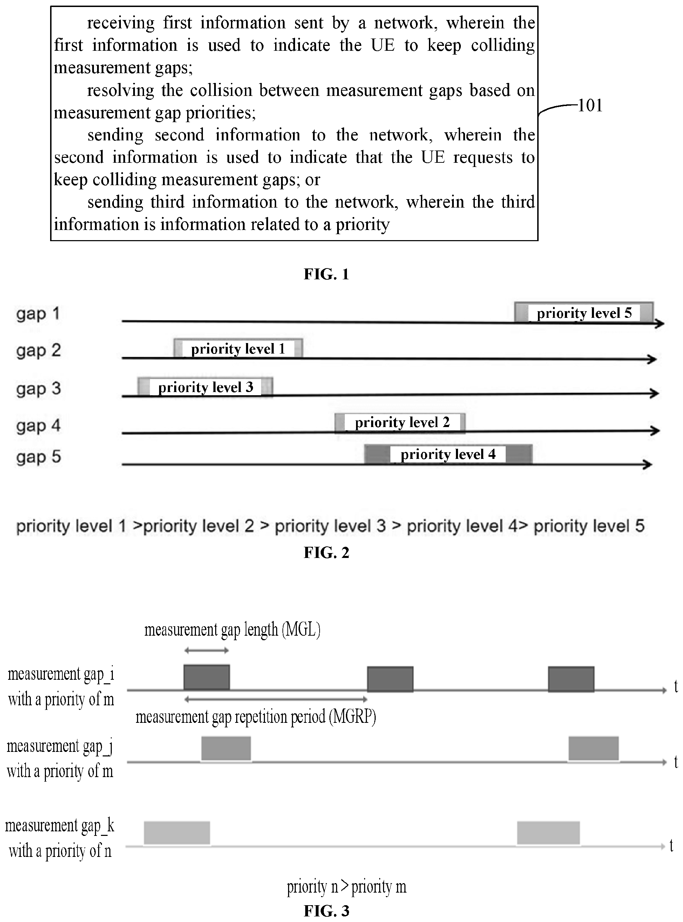

As shown in FIG. 1, an embodiment of the present disclosure provides a measurement method, applied to a UE, the method including at least one of the following in step 101:
receiving first information sent by a network, wherein the first information is used to indicate the UE to keep colliding measurement gaps;
resolving the collision between measurement gaps based on measurement gap priorities;
sending second information to the network, wherein the second information is used to indicate that the UE requests to keep colliding measurement gaps;
sending third information to the network, wherein the third information is information related to a priority.

It should be noted that, in this embodiment, the "network" may be described as a network-side device, or a network-side node, or a network, or a base station.

In this embodiment, the benefit of introducing the first information and the second information lies in that, compared with the prior art in which only a priority-based manner is used to handle measurement gap collision (colliding measurement gaps), the first information and/or the second information allow greater flexibility. As more types and quantities of measurement gaps are supported, a solution solely based on priorities is not suitable for all scenarios. For example, a MUSIM gap is configured based on a request from the UE. Even if there is a time domain colliding between measurement gaps, since the gaps are requested by the UE, it is not always necessary to drop any gap. For example, different gaps may be used for different purposes on the same frequency (such as reading broadcast information or performing measurements), and in this case the UE expects to keep all colliding gaps.

The benefit of introducing the third information lies in that, when the measurement gaps are implemented by the UE, the third information can provide the UE's priority preference for measurement gaps, thereby assisting the network in configuring priorities.

The first information, the second information, and the third information may be used in any combination or may be used independently, which is not limited in this embodiment.

In an optional embodiment of the present disclosure, the network determines whether to send the first information to the UE, or determines whether the first information indicates the UE to keep colliding measurement gaps, based on at least one of the following:
the network needs to make a determination by taking both measurement performance and throughput into consideration. As the number of measurement gaps increases, a cumulative length of the measurement gaps becomes longer. Within the measurement gap length, the network is unable to schedule the UE, and therefore the loss of throughput is higher. Conversely, parallel measurement gaps enable parallel measurements and can reduce measurement latency;
in a scenario with a relatively high latency requirement, or when the network expects the UE to feed back measurement results quickly, the network improves measurement performance at the cost of throughput loss. In this case, the network may indicate the UE to resolve collision between multiple measurement gaps in time domain in a keep solution, that is, in a scenario where a latency requirement is higher than a preset requirement, or where a duration for the network expecting the UE to feed back the measurement results is shorter than a preset duration, the network sends the first information to the UE, and/or the network determines that the first information indicates the UE to keep colliding measurement gaps.

It should be noted that, in this embodiment, "the UE keeps colliding measurement gaps" may also be described as "keep solution", or "the UE can perform measurement in all colliding measurement gaps", or "the UE keeps all colliding measurement gaps", or, by taking MUSIM gaps as an example, described as "the UE keeps all colliding MUSIM gap(s)", including periodic MUSIM gap(s) and aperiodic MUSIM gap(s). It can be understood that priority does not need to be considered. For handling collision among different MUSIM gaps. If the use of keep solution is granted, the UE shall keep all colliding periodic and aperiodic MUSIM gaps irrespectively of the priority of the periodic MUSIM gaps. The first information is used to indicate the UE to keep colliding measurement gaps can also be described as that the first information indicates the UE is allowed to use keep solution for colliding measurement gaps. The UE can request use of keep solution. If the UE's request for keep solution is granted, the UE shall keep all colliding measurement gaps. Exemplarily, when there are N measurement gaps (N is an integer greater than or equal to 2), "the UE keeps colliding measurement gaps" can be understood as the UE being able to perform measurement in the N measurement gaps. Compared with handling colliding measurement gaps based on the measurement gap priorities, the manner in which "the UE keeps colliding measurement gaps" does not need to drop colliding (or overlapping) measurement gaps. The first information may be indicated by 1 bit. For example, when the bit has a value of 1 or TRUE, the first information indicates the UE to resolve colliding measurement gaps using keep solution, or indicates the UE to resolve (can also be described as handle) collisions between measurement gaps by keep solution. When the bit has a value of 0 or FALSE, the first information indicates the UE not to handle collisions between measurement gaps using the keep solution, or indicates that the UE handle collisions between measurement gaps based on measurement gap priorities, or may be described as that the UE processes colliding measurement gaps using a priority manner or in a priority-based manner. If multiple MUSIM gaps are colliding, "the UE keeps colliding measurement gaps" may be described as that the UE keeps colliding MUSIM gap(s), wherein the MUSIM gap(s) may be periodic or aperiodic.

It should also be noted that a measurement gap is generally described as measurement gap(s), or measurement gap occasion, or simply gap(s), or abbreviated as MG.

A measurement gap includes at least one of the following:
multi-universal subscriber identity module gap(s) (MUSIM gap(s)), and the multi-universal subscriber identity module gap may be described as MUSIM measurement gap(s);
a pre-configured measurement gap (pre-MG);
a network controlled small gap (NCSG);
a Type-2 MG, wherein Type-2 MG refers to a gap configured by configuration information GapConfig-r17 but not configured with preConfigInd-r17 or ncsgInd-r17.

A measurement gap generally includes at least one of the following:
an index (the index may also be described as a gap ID or a gap pattern ID);
measurement gap length;
measurement gap repetition period;
an offset of the measurement gap;
a start of the measurement gap, wherein the start of the measurement gap includes at least one of: a start system frame number, a start system frame, or a start system subframe.

It should also be noted that colliding measurement gaps may also be described as colliding measurement gaps or colliding measurement gaps, including at least two measurement gaps overlapping in time domain and/or the distance between at least two measurement gaps being smaller than or equal to a certain threshold, e.g., the threshold is 4 milliseconds; wherein the at least two measurement gaps may be described as at least two sets of measurement gaps, or at least two measurement gap occasions. Taking MUSIM gaps as an example, MUSIM gap occasions are considered colliding if the MUSIM gaps are overlapping in time domain (or described as MUSIM gap occasions are overlapping in time domain) and/or the distance between two MUSIM gap occasions is smaller than or equal to 4 milliseconds. The MUSIM gap occasions are overlapping in time domain includes that the MUSIM gap occasions are fully overlapping in time domain or the MUSIM gap occasions are partially overlapping in time domain. A distance between two MUSIM gaps (or described as a distance between two MUSIM gap occasions) is defined as: a time difference between an ending point of the first MUSIM occasion and a starting point of the second MUSIM occasion, where the first MUSIM gap occasion occurs earlier in time than the second MUSIM gap occasion. The above MUSIM gap collision includes the case that MUSIM gaps (or described as MUSIM gap occasions) are colliding.

The MUSIM collision also includes the case that MUSIM gap and measurement gap are colliding (or described as MUSIM gap occasions and measurement gap occasions are colliding). The measurement gap here includes a measurement gap configured by signaling GapConfig-r17 but without preConfigInd-r17 or ncsgInd-r17. A collision between a MUSIM gap and a measurement gap includes that the MUSIM gap and the measurement gap are overlapping in time domain and/or the distance between the MUSIM gap and the measurement gap is smaller than or equal to 4 milliseconds. The MUSIM gap and the measurement gap overlapping in time domain includes the MUSIM gap and the measurement gap are fully overlapping in time domain and/or the MUSIM gap and the measurement gap are partially overlapping in time domain.

In this embodiment, "resolving the collision between measurement gaps based on measurement gap priorities" may be described as the UE using a priority-based manner (or priority solution, or priority scheme) to handle colliding measurement gaps, or may be described as "among the colliding measurement gaps, the UE keeps the measurement gap with higher priority", or may be described as "the UE performs measurement in the measurement gap with higher priority" and/or "the UE drops the measurement gap with lower priority". If the UE does not receive the first information, or the first information does not indicate the UE to use the keep solution (the UE keeps colliding measurement gaps), then the UE adopts the priority manner, i.e., the UE resolves the collision between measurement gaps based on measurement gap priorities. In summary, when keep solution is not used, collisions between measurement gap occasions are resolved based on measurement gap priorities.

It should be noted that the difference between the keep solution and the priority-based manner is as follows:

For N measurement gaps colliding in time domain, the priority-based manner can be understood as the UE keeping M measurement gaps among the N measurement gaps, wherein the kept M measurement gaps are determined by priorities, typically the measurement gaps with higher priorities. The keep solution can be understood as keeping the N measurement gaps. N is an integer greater than 2, M is an integer greater than or equal to 1, and N is greater than M. keeping a measurement gap can also be described as performing measurement within the measurement gap. A measurement gap that is not kept is a dropped measurement gap, and measurement cannot be performed in it.

In this embodiment, when there are N measurement gaps colliding in time domain, the keep solution can also be understood as the UE keeping the N measurement gaps in a keep solution, i.e., all time domain colliding measurement gaps are kept, meaning that even if multiple measurement gaps are colliding in time domain, the UE does not need to drop any of them, but can keep all colliding measurement gaps. The priority-based manner can also be understood as the UE dropping at least one time domain colliding (colliding) measurement gap, wherein the dropped measurement gap is determined based on priorities, typically the measurement gap with a lower priority, and N is an integer greater than 2.

In this embodiment, the UE determines whether to report second information and/or whether the second information is used to indicate that the UE requests to process colliding measurement gaps in a first manner through at least one of the following:
if the multiple measurement gaps requested by the UE are for operating on the same frequency (different gaps are used for different purposes on the same frequency: reading broadcast, system messages, measurement, etc.), then even if the multiple measurement gaps collision in time domain, since they are for measurement on the same frequency and do not involve radio frequency retuning, the UE can handle them simultaneously. In this case, the UE can report the second information and/or feedback in the second information to use the keep solution to handle the collision problem, i.e., keep the colliding measurement gaps;
if the multiple measurement gaps requested by the UE are for operating on different frequencies, but the UE has idle radio frequency chains, or the UE has strong baseband handling capability, the UE can report the second information and/or feedback in the second information to use the keep solution to handle the collision problem, i.e., keep the colliding measurement gaps;
if the multiple measurement gaps requested by the UE are for operating on different frequencies, and there is no idle radio frequency chain or baseband handling is limited, the UE cannot process multiple measurement gaps colliding in time domain simultaneously. The UE can report the second information and/or feedback in the second information that a keep solution is used to handle the collision issue, i.e., keeping all the colliding measurement gaps.

In an optional embodiment, for MUSIM gap(s) collision, the UE can request to use the keep solution, i.e., keep all colliding MUSIM gap(s). Keep solution is for handling collisions among different MUSIM gaps. For example, 1 bit may be used to indicate a request to use the keep solution for all MUSIM gaps, wherein the bit value of 1 or TRUE indicates that the UE requests to use the keep solution (i.e., keep all colliding MUSIM gaps) to process colliding MUSIM gaps, wherein the MUSIM gaps include periodic MUSIM gap(s) and/or aperiodic MUSIM gap(s).

In an optional embodiment, the method further includes at least one of the following:
when an aperiodic measurement gap collides with a measurement gap other than the aperiodic measurement gap, the aperiodic measurement gap is kept, which can also be described as: when the aperiodic measurement gap collides with another measurement gap, the aperiodic measurement gap is kept;
when an aperiodic multiple universal subscriber identity module gap (MUSIM gap) collides with any other gap, the aperiodic MUSIM gap is unconditionally kept, which can also be expressed as: when the aperiodic multiple universal subscriber identity module gap (MUSIM gap) collides with a measurement gap other than the aperiodic MUSIM gap, keeping the aperiodic MUSIM gap, that is, it can be understood as the aperiodic MUSIM gap is unconditionally kept.

It should be noted that an aperiodic measurement gap includes an aperiodic MUSIM gap, and a measurement gap other than the aperiodic measurement gap (which may also be described as another measurement gap) includes at least one of MUSIM gap(s), pre-MG, NCSG, or Type-2 MG.

It should be further noted that the implementation in which "when an aperiodic measurement gap collides with another measurement gap, the aperiodic measurement gap is kept" may be used independently of the above step 101. This optional embodiment may be predefined in a protocol. The benefit of this implementation lies in that, compared to periodic measurement gaps, opportunities for aperiodic measurement gaps are scarce. When an aperiodic MUSIM gap collides with another measurement gap (which can be understood as periodic measurement gaps), the aperiodic measurement gap is kept, i.e., measurement is performed within the aperiodic measurement gap. When there is an aperiodic MUSIM gap among colliding measurement gaps, which measurement gap is kept is no longer determined based on priorities (i.e., the measurement gap with the higher priority is not kept), and the measurement gap priorities are ignored, and the aperiodic MUSIM gap is always kept. Furthermore, the network does not need to configure a priority for the aperiodic MUSIM gap. The UE does not need to request a priority for the aperiodic MUSIM gap.

It should be further noted that a measurement gap other than the aperiodic MUSIM gap can be understood as other types of measurement gaps other than the aperiodic MUSIM gap, such as a periodic MUSIM gap, pre-MG, NCSG, Type-2 MG, etc. An implementation in which, when an aperiodic MUSIM gap collides with a measurement gap other than the aperiodic MUSIM gap, the aperiodic MUSIM gap is kept may be applied independently of the above step 101. When keep solution is not used, a periodic MUSIM gap occasion colliding with an aperiodic MUSIM gap is dropped (i.e. An aperiodic MUSIM gap, when configured, is unconditionally kept in case of collides with any other gap occasions, including MUSIM gaps and measurement gaps). When the use of keep solution is granted, the UE shall keep all colliding periodic and aperiodic MUSIM gaps irrespectively of the priority of the periodic MUSIM gaps.

In an optional embodiment, the third information includes a priority for the measurement gap requested by the UE.

It should be noted that the priority for the measurement gap requested by the UE may be described as the UE indicating the priority for the measurement gap. If the measurement gaps are MUSIM gap(s), the UE shall request a priority for all periodic MUSIM gap(s), i.e., cannot request priorities for only some MUSIM gaps (or described as a subset of MUSIM gaps). The UE does not need to request a priority for an aperiodic MUSIM gap. If an aperiodic MUSIM gap exists in a collide, the aperiodic MUSIM gap is unconditionally kept, and other measurement gaps (including periodic MUSIM gaps, measurement gaps configured by signaling GapConfig-r17 but without preConfigInd-r17 or ncsgInd-r17) are all dropped. Requesting a priority includes requesting to indicate a priority value of the measurement gap and/or requesting a relative priority between measurement gaps. Furthermore, the requested priority is UE's priority preference for measurement gaps. The priority for the measurement gap actually configured by the network (including the priority for the measurement gap and the relative priority between measurement gaps) may be different from the UE request, i.e. the allocated priorities may differ from the priorities requested by the UE. Regardless of whether requested by the UE or configured by the network, different measurement gaps have different priorities. The network cannot configure a priority for an aperiodic MUSIM gap.

The UE requests different priority for each measurement gap.

As an optional implementation, resolving the collision between measurement gaps based on the measurement gap priorities includes at least one of the following implementations.

Implementation 1: when a number of the colliding measurement gaps is greater than 2, resolving the collision between measurement gaps in a descending order of the priorities, which can be understood as the measurement gap with the higher priority being kept and the measurement gap with the lower priority being dropped.

resolving the collision between measurement gaps in a descending order of the priorities can be understood as starting from the highest priority (or described as starting from the highest among the priorities of the colliding measurement gaps), and handling the collisions in a descending order of priorities (i.e., determining the measurement gaps to keep or drop based on priority comparison), wherein the measurement gap with the higher priority is kept and the measurement gap with the lower priority is dropped.

Implementation 2: collisions between MUSIM gaps and measurement gaps are resolved based on priorities, which can also be understood as handling the colliding MUSIM gap and measurement gap based on the measurement gap priorities, wherein the measurement gap can be understood as a gap of a different type from the MUSIM gap. Specifically, in this implementation, the gap with the highest priority or the several gaps with higher priorities among the colliding MUSIM gap and measurement gap may be kept.

Implementation 3: collisions between MUSIM gaps and measurement gaps are resolved based on assigned priorities, which can also be understood as handling the colliding MUSIM gap and measurement gap based on the measurement gap priorities, wherein the priority of the MUSIM gap is pre-assigned. Specifically, in this implementation, the priority of the MUSIM gap is pre-assigned, and the manner of determining the priority of a gap of a different type from the MUSIM gap is not limited herein. The gap with the highest priority or the several gaps with higher priorities among the colliding MUSIM gap and measurement gap may be kept.

Implementation 4: collision between MUSIM gaps and measurement gap with assigned priority are resolved based on the priorities, which can also be understood as handling the colliding MUSIM gap and measurement gap based on the measurement gap priorities, wherein the priority for the measurement gap is pre-assigned, and the measurement gap can be understood as a gap of a different type from the MUSIM gap. Specifically, in this implementation, the priority of the gap of the different type from the MUSIM gap is pre-assigned, and the manner of determining the priority of the MUSIM gap is not limited herein. The gap with the highest priority or the several gaps with higher priorities among the colliding MUSIM gap and measurement gap may be kept.

Implementation 5: starting with the gap that has the highest priority, collisions are resolved sequentially in order of decreasing priority, which can also be described as, for colliding gaps, starting from the gap with the highest priority, handling the colliding gaps in descending order of priorities of the gaps. The gap may be a MUSIM gap or a measurement gap, and the measurement gap may also be understood as a measurement gap of a different type from the MUSIM gap.

Implementation 6: for each collision, the gap with higher priority shall be kept, which can also be understood as, for each colliding gap, keeping the gap with the highest priority, wherein the gap may be a MUSIM gap or a measurement gap, and the measurement gap may also be understood as a measurement gap of a different type from the MUSIM gap. In this implementation, only keeping the gap with the highest priority is limited, but how to handle the gaps other than the one with the highest priority is not limited herein; they may be kept or directly dropped.

Implementation 7: for each collision, the gap with higher priority shall be kept and other gaps shall be dropped, which can also be understood as, for each colliding measurement gap, keeping the gap with the highest priority, and dropping the gaps other than the gap with the highest priority (which may also be referred to as other gaps), i.e., only keeping the gap with the highest priority, wherein the gap may be a MUSIM gap or a measurement gap, and the measurement gap may also be understood as a measurement gap of a different type from the MUSIM gap.

In the above Implementation 5, Implementation 6, and Implementation 7, the measurement gap that collides (or collisions) with the MUSIM gap includes a measurement gap configured by signaling GapConfig-r17 but without preConfigInd-r17 or ncsgInd-r17.

Implementation 5, Implementation 6, and Implementation 7 are mainly applied in scenarios where more than two gaps collision. When multiple gaps collision, there will be multiple collisions in the time domain. How to handle these multiple collisions, for example, which collision to handle first and which collisions to handle next, is a problem to be solved. The solution of this implementation is to start handling from the collision (or described as collide) of the gap with the highest priority, and sequentially process other gap collides in descending order of priorities. At each collision, the gap with the highest priority among the colliding gaps is kept, and the other gaps are dropped.

In one implementation, a descending order of priorities may also be described as priorities decreasing.

For example, as shown in FIG. 2, multiple collisions of gaps exist. FIG. 2 includes five measurement gaps, namely gap1, gap2, gap3, gap4, and gap5, with corresponding priority levels and order as shown in FIG. 2. The priority level of gap1 is priority level 5, the priority level of gap2 is priority level 1, the priority level of gap3 is priority level 3, the priority level of gap4 is priority level 2, and the priority level of gap5 is priority level 4. Priority level 1 is higher than priority level 2, priority level 2 is higher than priority level 3, priority level 3 is higher than priority level 4, priority level 4 is higher than priority level 5, i.e., priority level 1 > priority level 2 > priority level 3 > priority level 4 > priority level 5. Based on Implementation 5, handling starts from the highest priority, that is, from gap2. Gap3 collides with gap2. Since the priority level of gap3 is lower than that of gap2, the UE drops gap3 (that is, the UE does not perform measurement in gap3) and keeps gap2. Next, gap4 with priority level 2 is processed. Gap5 collides with gap4. Since the priority level of gap5 is lower than that of gap4, gap4 is kept and gap5 is dropped. Finally, gap1 is processed. Although gap1 collides with gap5, gap5 has already been dropped in the previous steps. That is, after the preceding collision handling, gap5 no longer exists. Therefore, gap1 does not collide with any other gap and is kept. In summary, after handling based on this implementation, gap2, gap4, and gap1 are kept, while gap3 and gap5 are dropped.

In an optional embodiment, the method further includes:
the UE sends index indication information to the network, wherein the index indication information includes index information of the kept measurement gaps. Specifically, when the UE processes N (N is a non-zero integer) measurement gaps colliding in time domain by using a priority-based manner, the index indication information includes indices information of kept M measurement gaps among the N measurement gaps, wherein N is a non-zero integer and N is greater than or equal to M. When the UE processes N measurement gaps colliding in time domain by using the keep solution, the index indication information may also include index information of the N measurement gaps.

Exemplarily, the index indication information includes index information of measurement gap_m and measurement gap_n. If measurement gap_k, measurement gap_p, measurement gap_m, and measurement gap_n collision in time domain, then the UE needs to keep measurement gap_m and measurement gap_n for measurement and drop measurement gap_k and measurement gap_p. Since the UE notifies the network of the index information of the kept measurement gaps through the index indication information, the network can also explicitly determine in which measurement gaps scheduling cannot be performed, and in which measurement gaps data scheduling can be performed because the measurement gaps are dropped.

When kept N measurement gaps are MUSIM gaps and the N MUSIM gaps collide with a first measurement gap, wherein N is a non-zero integer, and the first measurement gap is a measurement gap other than the N MUSIM gaps, and the first measurement gap is another measurement gap other than the MUSIM gap, including at least one of pre-MG, NCSG, or Type-2 MG, as an optional embodiment, the method further includes at least one of the following implementations:
implementation 8: if a priority of the first measurement gap is higher than priorities of the N MUSIM gaps, keeping the first measurement gap or dropping the N MUSIM gaps;
implementation 9: if the priority of the first measurement gap is higher than any of priorities of the N MUSIM gaps, keeping the first measurement gap or dropping the N MUSIM gaps;
implementation 10: if the priority of the first measurement gap is lower than any of priorities of the N MUSIM gaps, dropping the first measurement gap or keeping the N MUSIM gaps;
implementation 11: if the priority of the first measurement gap is higher than a first priority, keeping the first measurement gap or dropping the N MUSIM gaps, wherein the first priority is a highest priority among the priorities of the N MUSIM gaps;
implementation 12: if the priority of the first measurement gap is lower than a second priority, dropping the first measurement gap or keeping the N MUSIM gaps, wherein the second priority is a lowest priority among the priorities of the N MUSIM gaps;
implementation 13: if the priority of the first measurement gap is higher than a priority of a first MUSIM gap, keeping the first measurement gap or dropping the N MUSIM gaps, wherein the N MUSIM gaps include the first MUSIM gap;
implementation 14: if the priority of the first measurement gap is lower than the priority of the first MUSIM gap, dropping the first measurement gap or keeping the N MUSIM gaps, wherein the N MUSIM gaps include the first MUSIM gap.

In the above several implementations, when the keep solution is adopted for multiple colliding MUSIM gaps, but the kept MUSIM gaps collide with a first measurement gap, at this time, the kept N MUSIM gaps are regarded as a whole. When the N MUSIM gaps collide with the first measurement gap, all the N MUSIM gaps may be dropped and the first measurement gap kept; or all the N MUSIM gaps may be kept and the first measurement gap dropped, wherein dropping or keeping is determined based on priorities.

Exemplarily, for the above Implementation 8, please refer to FIG. 3. Measurement gap_i and measurement gap_j are MUSIM gaps, both with a priority m. If the keep solution is adopted, both measurement gap_i and measurement gap_j are kept for measurement. The first measurement gap is measurement gap_k with a priority n. Measurement gap_i and measurement gap_j among the MUSIM gaps collide with measurement gap_k. If the priority n is higher than the priority m, then measurement gap_k may be kept, or measurement gap_i and measurement gap_j may be dropped.

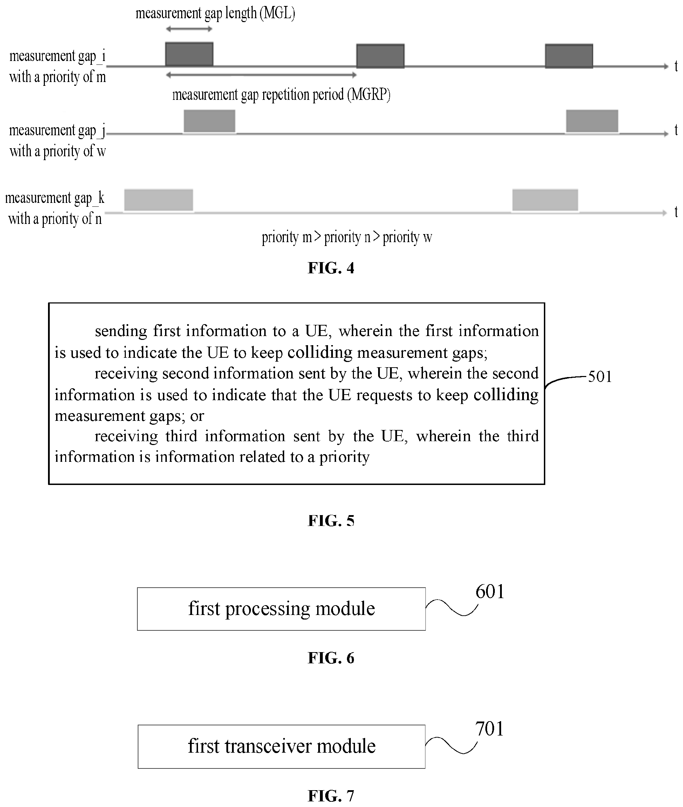

For the above Implementation 9, please refer to FIG. 4. Measurement gap_j and measurement gap_k are MUSIM gaps. The priority of measurement gap_j is w, and the priority of measurement gap_k is n. If the keep solution is adopted, both measurement gap_j and measurement gap_k are kept for measurement. The first measurement gap is measurement gap_i with a priority m. Measurement gap_j and measurement gap_k among the MUSIM gaps collide with measurement gap_i. If the priority m is higher than the priority n, and priority n is higher than the priority w, then measurement gap_i may be kept, or measurement gap_j and measurement gap_k may be dropped.

Further for the above Implementation 9, please refer to FIG. 4. Measurement gap_i and measurement gap_j are MUSIM gaps. The priority of measurement gap_i is m, and the priority of measurement gap_j is w. If the keep solution is adopted, both measurement gap_i and measurement gap_j are kept for measurement. The first measurement gap is measurement gap_k with a priority n. Measurement gap_i and measurement gap_j among the MUSIM gaps collide with measurement gap_k. If the priority m is higher than the priority n, and priority n is higher than the priority w, i.e., the priority of the first measurement gap is higher than the priority of measurement gap_j among the MUSIM gaps, then measurement gap_k may be kept, or measurement gap_i and measurement gap_j may be dropped.

For the above Implementation 10, please refer to FIG. 4. Measurement gap_i and measurement gap_j are MUSIM gaps. The priority of measurement gap_i is m, and the priority of measurement gap_j is w. If the keep solution is adopted, both measurement gap_i and measurement gap_j are kept for measurement. The first measurement gap is measurement gap_k with a priority n. Measurement gap_i and measurement gap_j among the MUSIM gaps collide with measurement gap_k. If the priority m is higher than the priority n, and priority n is higher than the priority w, i.e., the priority of the first measurement gap is lower than the priority of measurement gap_i among the MUSIM gaps, then measurement gap_k may be dropped, or measurement gap_i and measurement gap_j may be kept.

For the above Implementation 11, please refer to FIG. 4. Measurement gap_j and measurement gap_k are MUSIM gaps. The priority of measurement gap_j is w, and the priority of measurement gap_k is n, with a priority n being higher than the priority w, i.e., the first priority is priority n. If the keep solution is adopted, both measurement gap_j and measurement gap_k are kept for measurement. The first measurement gap is measurement gap_i with a priority m. Measurement gap_j and measurement gap_k among the MUSIM gaps collide with measurement gap_i. If the priority m is higher than the priority n, and priority n is higher than the priority w, i.e., the priority of the first measurement gap is higher than the first priority, then measurement gap_i may be kept, or measurement gap_j and measurement gap_k may be dropped.

For the above Implementation 12, please refer to FIG. 4. Measurement gap_i and measurement gap_k are MUSIM gaps. The priority of measurement gap_i is m, and the priority of measurement gap_k is n, i.e., the second priority is priority n. If the keep solution is adopted, both measurement gap_i and measurement gap_k are kept for measurement. The first measurement gap is measurement gap_j with a priority w. Measurement gap_i and measurement gap_k among the MUSIM gaps collide with measurement gap_j. If the priority m is higher than the priority n, and priority n is higher than the priority w, i.e., the priority of the first measurement gap is lower than the second priority, then measurement gap_j may be dropped, or measurement gap_i and measurement gap_k may be kept.

For the above Implementation 13, continue to refer to FIG. 4. If the MUSIM gaps include measurement gap_i and measurement gap_j, the first MUSIM gap is measurement gap_j, the priority of measurement gap_i is priority m, the priority of measurement gap_j is priority w, and the first measurement gap is measurement gap_k with a priority n. If the keep solution is adopted, both measurement gap_i and measurement gap_j are kept for measurement. Measurement gap_i and measurement gap_j among the MUSIM gaps collide with measurement gap_k. If the priority m is higher than the priority n, and priority n is higher than the priority w, i.e., the priority of the first measurement gap is higher than the priority of the first MUSIM gap, then measurement gap_k is kept or measurement gap_i and measurement gap_j are dropped.

For the above Implementation 14, continue to refer to FIG. 4. If the MUSIM gaps include measurement gap_i and measurement gap_j, the first MUSIM gap is measurement gap_i, the priority of measurement gap_i is priority m, the priority of measurement gap_j is priority w, and the first measurement gap is measurement gap_k with a priority n. If the keep solution is adopted, both measurement gap_i and measurement gap_j are kept for measurement. Measurement gap_i and measurement gap_j among the MUSIM gaps collide with measurement gap_k. If the priority m is higher than the priority n, and priority n is higher than the priority w, i.e., the priority of the first measurement gap is lower than the priority of the first MUSIM gap, then measurement gap_k is dropped or measurement gap_i and measurement gap_j are kept.

Furthermore, the first MUSIM gap includes:
information that is related to the first MUSIM gap and sent by the network, wherein the information related to the first MUSIM gap includes at least one of the following: an index of the first MUSIM gap, a gap period of the first MUSIM gap, or a gap length of the first MUSIM gap, i.e., the UE determines the first MUSIM gap based on target indication information sent by the network;
the first MUSIM gap is a MUSIM gap with the highest priority among the N MUSIM gaps;
the first MUSIM gap is a MUSIM gap with the lowest priority among the N MUSIM gaps.

When M measurement gaps collision, in an optional implementation of the present disclosure, the method further includes at least one of the following implementations:
implementation 15: when P measurement gaps among the M measurement gaps are MUSIM gaps, and the UE requests to process the P MUSIM gaps in a keep solution or the network indicates to keep the P MUSIM gaps, then the UE first keeps the P MUSIM gaps, and then, collisions between the P MUSIM gaps and M-P measurement gaps are processed based on the priorities (i.e., the M-P measurement gaps and the P MUSIM gaps are processed based on the priorities of the P MUSIM gaps and the M-P measurement gaps), wherein, optionally, the P MUSIM gaps and the M-P measurement gaps may be processed in a descending order of priorities, or processed in other manners;
implementation 16: the UE processes the P MUSIM gaps based on priorities of the P MUSIM gaps, and when kept Q MUSIM gaps collide with the M-P measurement gaps, handling collisions between the Q MUSIM gaps and the M-P measurement gaps based on the priorities (i.e., the M-P measurement gaps and the Q MUSIM gaps are processed based on the priorities of the Q MUSIM gaps and the M-P measurement gaps), wherein, optionally, the P MUSIM gaps and the M-P measurement gaps may be processed in a descending order of priorities, or processed in other manners;
wherein M, P, and Q are non-zero integers, M is greater than P, and P is greater than Q.

As an optional embodiment of the present disclosure, resolving the collision between measurement gaps based on the measurement gap priorities includes at least one of the following implementations:
implementation 17: collisions between MUSIM gaps are resolved based on the priorities, which may also be expressed as handling colliding MUSIM gaps based on the measurement gap priorities, wherein the colliding MUSIM gaps can be understood as collisions among different MUSIM gaps, i.e., two or more MUSIM gaps colliding;
implementation 18: starting with the MUSIM gap that has the highest priority, collisions are resolved sequentially in order of decreasing priority, which may also be expressed as starting from the MUSIM gap with the highest priority, handling the colliding MUSIM gaps in a descending order of priorities;
implementation 19: for each collision, the MUSIM gap with the highest priority shall be kept, which may also be expressed as, for each colliding MUSIM gap, keeping the MUSIM gap with the highest priority. In this implementation, for each colliding MUSIM gap, whether gaps other than the MUSIM gap with the highest priority are kept or dropped is not limited herein;
implementation 20: for each collision, the MUSIM gap with the highest priority shall be kept and the MUSIM gap with lower priority shall be dropped, which may also be expressed as, for each colliding MUSIM gap, keeping the MUSIM gap with the highest priority, and dropping MUSIM gaps other than the MUSIM gap with the highest priority.

Implementation 18, Implementation 19, and Implementation 20 in this optional embodiment are mainly applied in scenarios where more than two MUSIM gaps collision. When multiple MUSIM gaps collision, i.e., when more than two MUSIM gaps collision at multiple positions in the time domain. How to process these multiple collisions, for example, which collision to process first and which collisions to process subsequently, needs to be addressed. The solution of this optional embodiment is to start handling from the collision (or described as collide) of the MUSIM gap with the highest priority, and sequentially process other MUSIM gap collides in descending order of priorities. At each collision, the MUSIM gap with the highest priority among the colliding MUSIM gaps is kept, and the other MUSIM gaps are dropped. In one implementation, dropping the other MUSIM gaps may also be described as dropping the MUSIM gaps with lower priorities.

Exemplarily, as shown in FIG. 2, multiple collisions of MUSIM gaps exist. FIG. 2 includes five MUSIM gaps, namely gap1, gap2, gap3, gap4, and gap5, with corresponding priority level order as shown in FIG. 2. The priority level corresponding to gap1 is priority level 5, the priority level corresponding to gap2 is priority level 1, the priority level corresponding to gap3 is priority level 3, the priority level corresponding to gap4 is priority level 2, and the priority level corresponding to gap5 is priority level 4. Priority level 1 is higher than priority level 2, priority level 2 is higher than priority level 3, priority level 3 is higher than priority level 4, priority level 4 is higher than priority level 5, i.e., priority level 1 > priority level 2 > priority level 3 > priority level 4 > priority level 5. Based on Implementation 18, handling starts from the highest priority, that is, from gap2. Gap3 collides with gap2. Since the priority level of gap3 is lower than that of gap2, the UE drops gap3 (that is, the UE does not perform measurement in gap3) and keeps gap2. Next, gap4 with priority level 2 is processed. Gap5 collides with gap4. Since the priority level of gap5 is lower than that of gap4, gap4 is kept and gap5 is dropped. Finally, gap1 is processed. Although gap1 collides with gap5, gap5 has already been dropped in the previous steps. That is, after the preceding collision handling, gap5 no longer exists. Therefore, gap1 does not collide with any other gap and is kept. In summary, after handling based on this implementation, gap2, gap4, and gap1 are kept, while gap3 and gap5 are dropped.

Furthermore, in an optional embodiment, the method further includes at least one of the following:
collisions between MUSIM gaps and measurement gaps are handled based on measurement gap repetition period (MGRP), which may also be expressed as handling an colliding MUSIM gap and measurement gap based on measurement gap repetition periods (MGRPs);
collisions between MUSIM gaps and measurement gaps without assigned priority are handled based on MGRP, which may also be expressed as handling an colliding MUSIM gap and measurement gap based on MGRPs, wherein the measurement gap is not assigned a priority;
starting with the gap that has the longest MGRP, collisions are resolved sequentially in order of decreasing MGRP, which may also be expressed as starting from the measurement gap corresponding to the longest MGRP, handling colliding measurement gaps in a descending order of MGRPs;
for each collision, the gap with longer MGRP shall be kept, which may also be expressed as, for each colliding measurement gap, keeping the gap with the longest MGRP among the colliding measurement gaps, or, for each colliding measurement gap, keeping the first N gaps with the longest MGRPs among the colliding measurement gaps, wherein N is less than the number of colliding measurement gaps, or, for each colliding measurement gap, keeping the gaps whose MGRPs exceed a preset period among the colliding measurement gaps;
for each collision, the gap with longer MGRP shall be kept and other gaps shall be dropped, which may also be expressed as, for each colliding measurement gap, keeping the gap with the longest MGRP among the colliding measurement gaps, and dropping gaps other than the gap with the longest MGRP, or, for each colliding measurement gap, keeping the first N gaps with the longest MGRPs among the colliding measurement gaps, and dropping gaps other than the first N gaps with the longest MGRPs, wherein N is less than the number of colliding measurement gaps, or, for each colliding measurement gap, keeping the gaps whose MGRPs exceed a preset period among the colliding measurement gaps, and dropping gaps other than the gaps whose MGRPs exceed the preset period.

It should be noted that, in this optional embodiment, the handling logic for handling an collision between a MUSIM gap and a measurement gap based on MGRPs is substantially consistent with the handling logic for handling an collision between a MUSIM gap and a measurement gap based on the measurement gap priorities described above.

The implementations of "collisions between MUSIM gaps and measurement gaps without assigned priority are handled based on MGRP", "starting with the gap that has the longest MGRP, collisions are resolved sequentially in order of decreasing MGRP", "for each collision, the gap with longer MGRP shall be kept", and "for each collision, the gap with longer MGRP shall be kept and other gaps shall be dropped" in this optional embodiment are mainly applied in scenarios where, if a measurement gap is not assigned a priority, the collide cannot be handled through priorities. The solution is to resolve the collide based on MGRPs by keeping the gap with the longer MGRP. The reason is that, within a certain period, a gap with a longer MGRP appears less frequently than a gap with a shorter MGRP, and its resources are more valuable and need to be preferentially kept.

In this optional embodiment, the preset period may be a relatively long period, and the specific value can be set based on requirements. A measurement gap whose MGRP exceeds the preset period can be understood as a relatively long gap.

It should be noted that this optional embodiment may be used independently of the above step 101, or may be used in combination with the above step 101.

As shown in FIG. 5, an embodiment of the present disclosure further provides a measurement method, applied to a network, the method including at least one of the following in step 501:
sending first information to a UE, wherein the first information is used to indicate the UE to keep colliding measurement gaps;
receiving second information sent by the UE, wherein the second information is used to indicate that the UE requests to keep colliding measurement gaps;
receiving third information sent by the UE, wherein the third information is information related to a priority.

As an optional implementation, the third information includes a priority for the measurement gap requested by the UE. The priority for the measurement gap requested by the UE may be described as the UE indicating the priority for the measurement gap.

Optionally, the UE requests different priority for each measurement gap.

As an optional implementation, the method further includes:
receiving index indication information sent by the UE, wherein the index indication information includes index information of the kept measurement gaps.

It should be noted that the measurement method provided in the embodiments of the present disclosure is a network-side measurement method corresponding to the above measurement method applied to the UE. Therefore, all embodiments of the above measurement method applied to the UE are applicable to the measurement method applied to the network provided in the embodiments of the present disclosure, and can achieve the same or similar technical effects.

As shown in FIG. 6, an embodiment of the present disclosure further provides a measurement apparatus, applied to a UE, the apparatus including: a first processing module 601;
the first processing module 601 is configured to perform at least one of the following:
receiving first information sent by a network, wherein the first information is used to indicate the UE to keep colliding measurement gaps;
resolving the collision between measurement gaps based on measurement gap priorities;
sending second information to the network, wherein the second information is used to indicate that the UE requests to keep colliding measurement gaps;
sending third information to the network, wherein the third information is information related to a priority.

Optionally, the apparatus further includes a second processing module configured to perform at least one of the following:
when an aperiodic measurement gap collides with a measurement gap other than the aperiodic measurement gap, the aperiodic measurement gap is kept;
when an aperiodic multi-universal subscriber identity module gap (MUSIM gap) collides with any other gap, the aperiodic MUSIM gap is unconditionally kept.

Optionally, the third information includes a priority for the measurement gap requested by the UE.

Optionally, the UE requests different priority for each measurement gap.

Optionally, the first processing module 601 includes a first handling unit configured to perform at least one of the following:
when a number of the colliding measurement gaps is greater than 2, resolving the collision between measurement gaps in a descending order of the priorities;
collisions between MUSIM gaps and measurement gaps are resolved based on priorities;
collisions between MUSIM gaps and measurement gaps are resolved based on assigned priorities;
collision between MUSIM gaps and measurement gap with assigned priority are resolved based on the priorities;
starting with the gap that has the highest priority, collisions are resolved sequentially in order of decreasing priority;
for each collision, the gap with higher priority shall be kept;
for each collision, the gap with higher priority shall be kept and other gaps shall be dropped.

Optionally, the apparatus further includes:
a first sending module, configured to send index indication information to the network, wherein the index indication information includes index information of the kept measurement gaps.

Optionally, the apparatus further includes: a third processing module;
when kept N measurement gaps are MUSIM gaps and the N MUSIM gaps collide with a first measurement gap, the third processing module is configured to perform at least one of the following:
if a priority of the first measurement gap is higher than priorities of the N MUSIM gaps, keeping the first measurement gap or dropping the N MUSIM gaps;
if the priority of the first measurement gap is higher than any of priorities of the N MUSIM gaps, keeping the first measurement gap or dropping the N MUSIM gaps;
if the priority of the first measurement gap is lower than any of priorities of the N MUSIM gaps, dropping the first measurement gap or keeping the N MUSIM gaps;
if the priority of the first measurement gap is higher than a first priority, keeping the first measurement gap or dropping the N MUSIM gaps, wherein the first priority is a highest priority among the priorities of the N MUSIM gaps;
if the priority of the first measurement gap is lower than a second priority, dropping the first measurement gap or keeping the N MUSIM gaps, wherein the second priority is a lowest priority among the priorities of the N MUSIM gaps;
if the priority of the first measurement gap is higher than a priority of a first MUSIM gap, keeping the first measurement gap or dropping the N MUSIM gaps, wherein the N MUSIM gaps include the first MUSIM gap;
if the priority of the first measurement gap is lower than the priority of the first MUSIM gap, dropping the first measurement gap or keeping the N MUSIM gaps, wherein the N MUSIM gaps include the first MUSIM gap;
wherein N is a non-zero integer.

Optionally, the first measurement gap is a measurement gap other than the MUSIM gap;
the first measurement gap includes at least one of the following:
a pre-configured measurement gap (pre-MG);
a network controlled small gap (NCSG);
a Type-2 measurement gap (MG).

Optionally, the first MUSIM gap includes:
information that is related to the first MUSIM gap and sent by the network, wherein the information related to the first MUSIM gap includes at least one of the following: an index of the first MUSIM gap, a gap period of the first MUSIM gap, or a gap length of the first MUSIM gap;
the first MUSIM gap is a MUSIM gap with the highest priority among the N MUSIM gaps;
the first MUSIM gap is a MUSIM gap with the lowest priority among the N MUSIM gaps.

Optionally, the apparatus further includes: a fourth processing module;
when M measurement gaps collide, the fourth processing module is configured to perform at least one of the following:
when P measurement gaps among the M measurement gaps are MUSIM gaps, and the UE requests to process the P MUSIM gaps in a keep solution or the network indicates to keep the P MUSIM gaps, keeping the P MUSIM gaps, and handling collisions between the P MUSIM gaps and M-P measurement gaps based on the priorities;
handling the P MUSIM gaps based on priorities of the P MUSIM gaps, and when kept Q MUSIM gaps collide with the M-P measurement gaps, handling collisions between the Q MUSIM gaps and the M-P measurement gaps based on the priorities;
wherein M, P, and Q are non-zero integers, M is greater than P, and P is greater than Q.

Optionally, the first processing module 601 includes a second handling unit configured to perform at least one of the following:
collisions between MUSIM gaps are resolved based on the priorities;
starting with the MUSIM gap that has the highest priority, collisions are resolved sequentially in order of decreasing priority;
for each collision, the MUSIM gap with the highest priority shall be kept;
for each collision, the MUSIM gap with the highest priority shall be kept and the MUSIM gap with lower priority shall be dropped.

Optionally, the apparatus further includes a fourth processing module configured to perform at least one of the following:
collisions between MUSIM gaps and measurement gaps are handled based on measurement gap repetition period (MGRP);
collisions between MUSIM gaps and measurement gaps without assigned priority are handled based on MGRP;
starting with the gap that has the longest MGRP, collisions are resolved sequentially in order of decreasing MGRP;
for each collision, the gap with longer MGRP shall be kept;
for each collision, the gap with longer MGRP shall be kept and other gaps shall be dropped.

It should be noted that the measurement apparatus applied to the UE provided in the embodiments of the present disclosure is an apparatus capable of performing the above measurement method applied to the UE. Therefore, all embodiments of the above measurement method applied to the UE are applicable to the apparatus, and can achieve the same or similar technical effects.

As shown in FIG. 7, an embodiment of the present disclosure further provides a measurement apparatus, applied to a network, the apparatus including: a first transceiver module 701;
the first transceiver module 701 is configured to perform at least one of the following:
sending first information to a UE, wherein the first information is used to indicate the UE to keep colliding measurement gaps;
receiving second information sent by the UE, wherein the second information is used to indicate that the UE requests to keep colliding measurement gaps;
receiving third information sent by the UE, wherein the third information is information related to a priority.

Optionally, the third information includes a priority for the measurement gap requested by the UE.

Optionally, the UE requests different priority for each measurement gap.

Optionally, the apparatus further includes:
a first receiving module, configured to receive index indication information sent by the UE, wherein the index indication information includes index information of the kept measurement gaps.

It should be noted that the measurement apparatus applied to the network provided in the embodiments of the present disclosure is an apparatus capable of performing the above measurement method applied to the network. Therefore, all embodiments of the above measurement method applied to the network are applicable to the apparatus, and can achieve the same or similar technical effects.

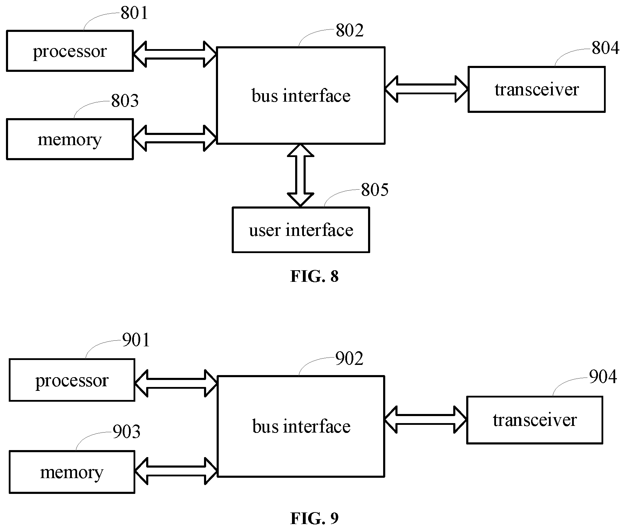

As shown in FIG. 8, an embodiment of the present disclosure further provides a UE, including: a processor 801; and a memory 803 connected to the processor 801 via a bus interface 802, wherein the memory 803 is configured to store a program and data used by the processor 801 when performing operations, and the processor 801 calls and executes the program and data stored in the memory 803.

A transceiver 804 is connected to the bus interface 802 and is configured to receive and send data under the control of the processor 801. Specifically, the processor 801 is configured to read the program in the memory 803 and execute the following process:
resolving the collision between measurement gaps based on measurement gap priorities;
   and/or,
the transceiver 804 is configured to perform at least one of the following:
   receiving first information sent by a network, wherein the first information is used to indicate the UE to keep colliding measurement gaps;
   sending second information to the network, wherein the second information is used to indicate that the UE requests to keep colliding measurement gaps;
   sending third information to the network, wherein the third information is information related to a priority.

Optionally, the processor 801 is further configured to perform at least one of the following:
when an aperiodic measurement gap collides with a measurement gap other than the aperiodic measurement gap, the aperiodic measurement gap is kept;
when an aperiodic multi-universal subscriber identity module gap (MUSIM gap) collides with any other gap, the aperiodic MUSIM gap is unconditionally kept.

Optionally, the third information includes a priority for the measurement gap requested by the UE.

Optionally, the UE requests different priority for each measurement gap.

Optionally, the processor 801 is configured to perform at least one of the following:
when a number of the colliding measurement gaps is greater than 2, resolving the collision between measurement gaps in a descending order of the priorities;
collisions between MUSIM gaps and measurement gaps are resolved based on priorities;
collisions between MUSIM gaps and measurement gaps are resolved based on assigned priorities;
collision between MUSIM gaps and measurement gap with assigned priority are resolved based on the priorities;
starting with the gap that has the highest priority, collisions are resolved sequentially in order of decreasing priority;
for each collision, the gap with higher priority shall be kept;
for each collision, the gap with higher priority shall be kept and other gaps shall be dropped.

Optionally, the transceiver 804 is further configured to:
send index indication information to the network, wherein the index indication information includes index information of the kept measurement gaps.

Optionally, when kept N measurement gaps are MUSIM gaps and the N MUSIM gaps collide with a first measurement gap, the processor 801 is further configured to perform at least one of the following:
if a priority of the first measurement gap is higher than priorities of the N MUSIM gaps, keeping the first measurement gap or dropping the N MUSIM gaps;
if the priority of the first measurement gap is higher than any of priorities of the N MUSIM gaps, keeping the first measurement gap or dropping the N MUSIM gaps;
if the priority of the first measurement gap is lower than any of priorities of the N MUSIM gaps, dropping the first measurement gap or keeping the N MUSIM gaps;
if the priority of the first measurement gap is higher than a first priority, keeping the first measurement gap or dropping the N MUSIM gaps, wherein the first priority is a highest priority among the priorities of the N MUSIM gaps;
if the priority of the first measurement gap is lower than a second priority, dropping the first measurement gap or keeping the N MUSIM gaps, wherein the second priority is a lowest priority among the priorities of the N MUSIM gaps;
if the priority of the first measurement gap is higher than a priority of a first MUSIM gap, keeping the first measurement gap or dropping the N MUSIM gaps, wherein the N MUSIM gaps include the first MUSIM gap;
if the priority of the first measurement gap is lower than the priority of the first MUSIM gap, dropping the first measurement gap or keeping the N MUSIM gaps, wherein the N MUSIM gaps include the first MUSIM gap;
wherein N is a non-zero integer.

Optionally, the first measurement gap is a measurement gap other than the MUSIM gap;
the first measurement gap includes at least one of the following:
a pre-configured measurement gap (pre-MG);
a network controlled small gap (NCSG);
a Type-2 measurement gap (MG).

Optionally, the first MUSIM gap includes:
information that is related to the first MUSIM gap and sent by the network, wherein the information related to the first MUSIM gap includes at least one of the following: an index of the first MUSIM gap, a gap period of the first MUSIM gap, a gap length of the first MUSIM gap;
the first MUSIM gap is a MUSIM gap with the highest priority among the N MUSIM gaps; or
the first MUSIM gap is a MUSIM gap with the lowest priority among the N MUSIM gaps.

Optionally, when M measurement gaps collide, the processor 801 is further configured to perform at least one of the following:
when P measurement gaps among the M measurement gaps are MUSIM gaps, and the UE requests to process the P MUSIM gaps in a keep solution or the network indicates to keep the P MUSIM gaps, keeping the P MUSIM gaps, and handling collisions between the P MUSIM gaps and M-P measurement gaps based on the priorities;
handling the P MUSIM gaps based on priorities of the P MUSIM gaps, and when kept Q MUSIM gaps collide with the M-P measurement gaps, handling collisions between the Q MUSIM gaps and the M-P measurement gaps based on the priorities;
wherein M, P, and Q are non-zero integers, M is greater than P, and P is greater than Q.

Optionally, the processor 801 is configured to perform at least one of the following:
collisions between MUSIM gaps are resolved based on the priorities;
starting with the MUSIM gap that has the highest priority, collisions are resolved sequentially in order of decreasing priority;
for each collision, the MUSIM gap with the highest priority shall be kept;
for each collision, the MUSIM gap with the highest priority shall be kept and the MUSIM gap with lower priority shall be dropped.

Optionally, the processor 801 is further configured to perform at least one of the following:
collisions between MUSIM gaps and measurement gaps are handled based on measurement gap repetition period (MGRP);
collisions between MUSIM gaps and measurement gaps without assigned priority are handled based on MGRP;
starting with the gap that has the longest MGRP, collisions are resolved sequentially in order of decreasing MGRP;
for each collision, the gap with longer MGRP shall be kept;
for each collision, the gap with longer MGRP shall be kept and other gaps shall be dropped.

In FIG. 8, a bus architecture may include any number of interconnected buses and bridges, which specifically link together various circuits of one or more processors represented by a processor 801 and a memory represented by a memory 803. The bus architecture may also link together various other circuits such as peripheral devices, voltage regulators, and power management circuits, which are well known in the art and therefore are not described further herein. A bus interface provides a user interface 805. The transceiver 804 may be a plurality of elements, i.e., include a transmitter and a receiver, and provide a unit for communicating with various other apparatuses over a transmission medium. The processor 801 is responsible for managing the bus architecture and general handling, and the memory 803 may store data used by the processor 801 when performing operations.

As shown in FIG. 9, an embodiment of the present disclosure further provides a network device, including: a processor 901; and a memory 903 connected to the processor 901 via a bus interface 902, wherein the memory 903 is configured to store a program and data used by the processor 901 when performing operations, and the processor 901 calls and executes the program and data stored in the memory 903.

A transceiver 904 is connected to the bus interface 902 and is configured to receive and send data under the control of the processor 901. Specifically, the processor 901 is configured to read the program in the memory 903, and the transceiver 904 is configured to perform at least one of the following:
sending first information to a UE, wherein the first information is used to indicate the UE to keep colliding measurement gaps;
receiving second information sent by the UE, wherein the second information is used to indicate that the UE requests to keep colliding measurement gaps;
receiving third information sent by the UE, wherein the third information is information related to a priority.

Optionally, the third information includes a priority for the measurement gap requested by the UE.

Optionally, the UE requests different priority for each measurement gap.

Optionally, the transceiver 904 is further configured to:
receive index indication information sent by the UE, wherein the index indication information includes index information of the kept measurement gaps.

In FIG. 9, a bus architecture may include any number of interconnected buses and bridges, which specifically link together various circuits of one or more processors represented by a processor 901 and a memory represented by a memory 903. The bus architecture may also link together various other circuits such as peripheral devices, voltage regulators, and power management circuits, which are well known in the art and therefore are not described further herein. A bus interface provides an interface. The transceiver 904 may be a plurality of elements, i.e., include a transmitter and a receiver, and provide a unit for communicating with various other apparatuses over a transmission medium. The processor 901 is responsible for managing the bus architecture and general handling, and the memory 903 may store data used by the processor 901 when performing operations.

In addition, a specific embodiment of the present disclosure further provides a computer-readable storage medium storing thereon a computer program, wherein the program, when executed by a processor, implements the steps of the measurement method applied to a UE based on any one of the above, or implements the steps of the measurement method applied to a network device based on any one of the above.

In the several embodiments provided in the present disclosure, it should be understood that the disclosed methods and apparatuses may be implemented in other ways. For example, the apparatus embodiments described above are merely illustrative. For example, the division of the units is only a logical function division, and there may be other division manners in actual implementation. For example, multiple units or components may be combined or integrated into another system, or some features may be ignored or not performed. In addition, the coupling, direct coupling, or communication connection shown or discussed between components may be implemented through one or more interfaces, and may be an indirect coupling or communication connection between apparatuses or units, which may be electrical, mechanical, or in other forms.

In addition, in the various embodiments of the present disclosure, the functional units may be integrated into one handling unit, or the units may be physically separate, or two or more units may be integrated into one unit. The integrated unit may be implemented in the form of hardware, or in the form of hardware combined with software functional units.

The integrated units implemented in the form of software functional units as described above may be stored in a computer-readable storage medium. The software functional units are stored in a storage medium and include a plurality of instructions for enabling a computer device (which may be a personal computer, a server, or a network device) to perform part of the steps of the transceiving method based on various embodiments of the present disclosure. The aforementioned storage medium includes, but is not limited to, a USB flash drive, a removable hard disk, a Read-Only Memory (ROM), a Random Access Memory (RAM), a magnetic disk, an optical disc, and other media that can store program codes.

The above descriptions are merely preferred embodiments of the present disclosure. It should be noted that, for those of ordinary skill in the art, various improvements and modifications may be made without departing from the principles of the present disclosure, and such improvements and modifications shall also fall within the protection scope of the present disclosure.

## Claims

1. A measurement method, applied to a User Equipment (UE), wherein the method comprises at least one of the following:
receiving first information sent by a network, wherein the first information is used to indicate the UE to keep colliding measurement gaps;
resolving the collision between measurement gaps based on measurement gap priorities;
sending second information to the network, wherein the second information is used to indicate that the UE requests to keep colliding measurement gaps;
sending third information to the network, wherein the third information is information related to a priority.

2. The method according to claim 1, wherein the method further comprises at least one of the following:
when an aperiodic measurement gap collides with a measurement gap other than the aperiodic measurement gap, the aperiodic measurement gap is kept;
when an aperiodic multi-universal subscriber identity module gap (MUSIM gap) collides with any other gap, the aperiodic MUSIM gap is unconditionally kept.

3. The method according to claim 1, wherein the third information indicates a priority for the measurement gap requested by the UE.

4. The method according to claim 3, wherein the UE requests different priority for each measurement gap.

5. The method according to claim 1, wherein resolving the collision between measurement gaps based on the measurement gap priorities comprises at least one of the following:
when a number of the colliding measurement gaps is greater than 2, resolving the collision between measurement gaps in a descending order of the priorities;
collisions between MUSIM gaps and measurement gaps are resolved based on priorities;
collisions between MUSIM gaps and measurement gaps are resolved based on assigned priorities;
collision between MUSIM gaps and measurement gap with assigned priority are resolved based on the priorities;
starting with the gap that has the highest priority, collisions are resolved sequentially in order of decreasing priority;
for each collision, the gap with higher priority shall be kept;
for each collision, the gap with the higher priority shall be kept and the gap with lower priority shall be dropped.

6. The method according to claim 1, wherein the method further comprises:
sending index indication information to the network, wherein the index indication information comprises index information of the kept measurement gaps.

7. The measurement method according to claim 1, wherein when kept N measurement gaps are MUSIM gaps and the N MUSIM gaps collide with a first measurement gap, the method further comprises at least one of the following:
if a priority of the first measurement gap is higher than priorities of the N MUSIM gaps, keeping the first measurement gap or dropping the N MUSIM gaps;
if the priority of the first measurement gap is higher than any of priorities of the N MUSIM gaps, keeping the first measurement gap or dropping the N MUSIM gaps;
if the priority of the first measurement gap is lower than any of priorities of the N MUSIM gaps, dropping the first measurement gap or keeping the N MUSIM gaps;
if the priority of the first measurement gap is higher than a first priority, keeping the first measurement gap or dropping the N MUSIM gaps, wherein the first priority is a highest priority among the priorities of the N MUSIM gaps;
if the priority of the first measurement gap is lower than a second priority, dropping the first measurement gap or keeping the N MUSIM gaps, wherein the second priority is a lowest priority among the priorities of the N MUSIM gaps;
if the priority of the first measurement gap is higher than a priority of a first MUSIM gap, keeping the first measurement gap or dropping the N MUSIM gaps, wherein the N MUSIM gaps comprise the first MUSIM gap;
if the priority of the first measurement gap is lower than the priority of the first MUSIM gap, dropping the first measurement gap or keeping the N MUSIM gaps, wherein the N MUSIM gaps comprise the first MUSIM gap;
wherein N is a non-zero integer.

8. The measurement method according to claim 7, wherein the first measurement gap is a measurement gap other than the MUSIM gap;
the first measurement gap comprises at least one of the following:
a pre-configured measurement gap (pre-MG);
a network controlled small gap (NCSG);
a Type-2 measurement gap (MG).

9. The measurement method according to claim 7, wherein the first MUSIM gap comprises:
information that is related to the first MUSIM gap and sent by the network, wherein the information related to the first MUSIM gap comprises at least one of the following: an index of the first MUSIM gap, a gap period of the first MUSIM gap, or a gap length of the first MUSIM gap;
the first MUSIM gap is a MUSIM gap with the highest priority among the N MUSIM gaps;
the first MUSIM gap is a MUSIM gap with the lowest priority among the N MUSIM gaps.

10. The method according to claim 1, wherein when M measurement gaps collide, the method further comprises at least one of the following:
when P measurement gaps among the M measurement gaps are MUSIM gaps, and the UE requests to process the P MUSIM gaps in a keep solution or the network indicates to keep the P MUSIM gaps, keeping the P MUSIM gaps, and handling collisions between the P MUSIM gaps and M-P measurement gaps based on the priorities;
handling the P MUSIM gaps based on priorities of the P MUSIM gaps, and when kept Q MUSIM gaps collide with the M-P measurement gaps, handling collisions between the Q MUSIM gaps and the M-P measurement gaps based on the priorities;
wherein M, P, and Q are non-zero integers, M is greater than P, and P is greater than Q.

11. The method according to claim 1, wherein resolving the collision between measurement gaps based on the measurement gap priorities comprises at least one of the following:
collisions between MUSIM gaps are resolved based on the priorities;
starting with the MUSIM gap that has the highest priority, collisions are resolved sequentially in order of decreasing priority;
for each collision, the MUSIM gap with the highest priority shall be kept;
for each collision, the MUSIM gap with the highest priority shall be kept and the MUSIM gap with lower priority shall be dropped.

12. The method according to claim 1, wherein the method further comprises at least one of the following:
collisions between MUSIM gaps and measurement gaps are handled based on measurement gap repetition period (MGRP);
collisions between MUSIM gaps and measurement gaps without assigned priority are handled based on MGRP;
starting with the gap that has the longest MGRP, collisions are resolved sequentially in order of decreasing MGRP;
for each collision, the gap with longer MGRP shall be kept;
for each collision, the gap with longer MGRP shall be kept and the gap with shorter MGRP shall be dropped.

13. A measurement method, applied to a network, wherein the method comprises at least one of the following:
sending first information to a UE, wherein the first information is used to indicate the UE to keep colliding measurement gaps;
receiving second information sent by the UE, wherein the second information is used to indicate that the UE requests to keep colliding measurement gaps;
receiving third information sent by the UE, wherein the third information is information related to a priority.

14. The method according to claim 13, wherein the third information comprises a priority for the measurement gap requested by the UE.

15. The method according to claim 14, wherein the UE requests different priority for each measurement gap.

16. The method according to claim 13, wherein the method further comprises:
receiving index indication information sent by the UE, wherein the index indication information comprises index information of the kept measurement gaps.

17. A measurement apparatus, applied to a UE, wherein the apparatus comprises: a first processing module;
the first processing module is configured to perform at least one of the following:
receiving first information sent by a network, wherein the first information is used to indicate the UE to keep colliding measurement gaps;
resolving the collision between measurement gaps based on measurement gap priorities;
sending second information to the network, wherein the second information is used to indicate that the UE requests to keep colliding measurement gaps;
sending third information to the network, wherein the third information is information related to a priority.

18. A measurement apparatus, applied to a network, wherein the apparatus comprises: a first transceiver module;
the first transceiver module is configured to perform at least one of the following:
sending first information to a UE, wherein the first information is used to indicate the UE to keep colliding measurement gaps;
receiving second information sent by the UE, wherein the second information is used to indicate that the UE requests to keep colliding measurement gaps;
receiving third information sent by the UE, wherein the third information is information related to a priority.

19. A UE, comprising: a processor, a memory, and a program stored on the memory and executable on the processor, wherein the program, when executed by the processor, implements the measurement method according to any one of claims 1 to 12.

20. A network device, comprising: a processor, a memory, and a program stored on the memory and executable on the processor, wherein the program, when executed by the processor, implements the measurement method according to any one of claims 14 to 16.

21. A readable storage medium storing thereon a program, wherein the program, when executed by a processor, implements the steps of the measurement method according to any one of claims 1 to 12, or implements the steps of the measurement method according to any one of claims 14 to 16.
